Europäisches Patentamt

European Patent Office

Office européen des brevets

(19)

(11) Publication number: 0 097 495
B1

(12) **EUROPEAN PATENT SPECIFICATION**

(45) Date of publication of patent specification: 10.09.86

(21) Application number: 83303498.6

(22) Date of filing: 16.06.83

(51) Int. Cl.⁴: C 08 F 20/06, C 08 F 2/10

(54) Polymers of unsaturated acids.

(30) Priority: 16.06.82 GB 8217375

(43) Date of publication of application:
04.01.84 Bulletin 84/01

(45) Publication of the grant of the patent:
10.09.86 Bulletin 86/37

(84) Designated Contracting States:
AT BE CH DE FR IT LI LU NL SE

(56) References cited:
FR-A-1 551 553
FR-A-2 242 404
US-A-3 665 035

(73) Proprietor: Albright & Wilson Limited
Albright & Wilson House Hagley Road West
Oldbury Warley West Midlands, B68 ONN (GB)

(72) Inventor: Haughton, Michael Harry
9 Seaton Park
Seaton Workington Cumbria (GB)
Inventor: Martin, Clifford George
6 Headlands Drive
Whitehaven Cumbria (GB)

(74) Representative: Wilson, Michael John et al
c/o Albright & Wilson Limited 1 Knightsbridge
Green
London SW1X 7QD (GB)

The file contains technical information
submitted after the application was filed and
not included in this specification

Courier Press, Leamington Spa, England.

# 0 097 495

**Description**

This invention relates to polymers of unsaturated acids and salts thereof and methods of making them.

Polyacrylic acids and their alkali metal salts are known for use in aqueous solution for water treatment to stop deposition of solids and as dispersants and deflocculants to produce stable suspensions in e.g. minerals processing. They may also be used for sequestering metal ions such as calcium and magnesium in circumstances when polyphosphates cannot be used; they may also be anti redeposition agents in detergents. For optimum properties with each use a close control on the molecular weight of the polymer is desired. The polyacrylates may be made by polymerizing acrylic acid in water in the presence of a catalyst, which is a free radical catalyst, often in combinations with a chain terminator. The polymerization of acrylic acid in the presence of water, ammonium persulphate and 2-mercapto- ethanol or thioglycollic acid is described in USP 3787488/3904522 or 3665035/3756257 respectively. In the Examples the acrylic acid persulphate and particular thiol compound were each added in one or more separate portions to a well stirred aqueous solution. The polymerization of acrylonitrile optionally mixed with acrylic acid with a redox initiator combination of hyphochlorite or chlorite with a sulphoxy compound is described in French Patent 1551553 for making polymers for fibre use; the redox combination of chlorate and sulphoxy compounds is stated to give rise to draw backs. The continuous polymerization of ethylenically unsaturated monomers, preferably styrene, in which a portion of product polymer from a stirred reactor is recycled to mix with fresh monomer is described in French Patent 2242404.

One problem with the above aqueous solution processes for polymerizing acrylic acid is that the properties of the polymer obtained often vary significantly from batch to batch, because the properties depend critically on the detailed conditions of the polymerization e.g. efficiency of mixing and reaction temperature and for many uses the properties of the polymer are critical. In addition the process has been found to give uneconomic conversions of monomer to polymer, so the monomer content of the product solution is often unacceptably high. Furthermore commercially a high concentration of polymer is wanted and, because of severe and fast heat evolution, the process must be performed in very many stages of addition of all the reagents and with the high risk of undesirable branching of the polymer chains.

We have found a process for making a more uniform polymer product in a more controlled manner.

The present invention provides a process for preparing a polymer from monomer comprising acrylic acid in which the monomer is polymerized in the presence of a free radical initiator characterised in that in a continuous process, a monomer component, which comprises at least 70 molar% of acrylic acid and optionally up to 30 molar % of a copolymerizable monomer, a free radical initiator and a free radical chain terminator are passed into a loop reactor in which they are mixed with a recycled aqueous mixture comprising a water soluble polymer of said monomer component, and are reacted therein to form an aqueous reaction mixture comprising the water soluble polymer of said monomer component, and a product portion of said reaction mixture is removed as a solution of water soluble polymer product leaving a remaining portion and said remaining portion is recycled as said recycled aqueous mixture for mixing again with said monomer component initiator and terminator, said aqueous reaction mixture and/or said remaining portion being cooled and the ratio of said remaining portion to said product portion being at least 50:1. The said product portion may be subsequently aged if needed to complete the polymerization, preferably by holding it at elevated temperature without addition of further initiator.

The water soluble polymer which may be made by the process of the invention has repeating units derived from said monomer component and may be such that when in the form of an aqueous solution at pH 7.2 of 42% concentration of the sodium salt of the polymer then said salt usually has a weight average molecular weight Mw, and number average molecular weight Mn, which are related according to the function Mw/Mn=(a Mw+b), where a is $0.1 \times 10^{-5}$ to $7 \times 10^{-5}$, and b is 1-1.8. The water soluble polymer is preferably made in an aqueous medium, usually a solution which comprises at least 30% (particularly at least 40%) by weight of said polymer or an at least partly neutralised salt thereof, e.g. sodium, potassium and ammonium salts.

The main monomer component is acrylic acid, which may be substantially water free e.g. glacial acrylic acid or may be added as aqueous acrylic acid of at least 60% acrylic content. Preferably the acrylic acid is substantially the only polymerizable monomer, but there may be up to 30 molar % e.g. 1—30 or 10—30% or 1—20% (based on the total moles of monomer component) of another copolymerizable monomer. Said monomer forms a water soluble polymer with said 70% or more of acrylic acid; said monomer is usually miscible with acrylic acid and often with water and is generally a liquid, though solids which dissolve in acrylic acid or water may be used. The amount of the copolymerizable monomer is such that the mixture of monomer component and recycled aqueous mixture is a solution at the reaction temperature, and that the aqueous reaction mixture produced is also solution at the reaction temperature. Examples of such copolymerizable monomers are ethylenically unsaturated carboxylic acids of 4—8 carbon atoms with 1 or 2 carboxylic acid groups e.g. methacrylic crotonic, fumaric and maleic acids, maleic anhydride, amides of such acids, such as methacrylamide and acrylamide and dialkyl aminoalkylene amides thereof e.g. ones with 1—3 carbon atoms in each alkyl or alkylene group such as dimethyl amino propyl (or ethyl) acrylamide, and esters of said acids with alkanols of 1—4 carbon atoms e.g. methanol or ethanol, such as methyl methacrylate or methyl acrylate, or with alkane diols e.g. of 2—4 carbon atoms, such as

2

2-hydroxyethyl- and 2 or 3 hydroxy propyl acrylate and methacrylate; esters of said acids with alkanols of 1—24 carbon atoms in molar amounts of up to 10% may be used. Examples of monomer components are mixtures of 70—90 molar % acrylic acid and 10—30% molar % methyl acrylate. The monomer component may contain small amounts of polymerization inhibitors as stabilizers e.g. 50—500 ppm hydroquinone or its methyl ether.

The free radical initiator may be any one known per se for free radical polymerizations of olefinic monomers; such initiators are described for example in "Emulsion Polymerizations" by D.C. Blackley Applied Science Publishers London 1975, pages 155—245. Examples are peroxy compounds, e.g. per sulphate (als called peroxy disulphate) salts, such as ammonium and alkali metal (e.g. sodium) persulphates, hydrogen peroxide, acyl peroxides e.g. of 2—16 carbon atoms such as benzoyl peroxide and acetyl peroxide, alkyl hydroperoxides e.g. of 2—10 carbon atoms such as tert. butyl hydroperoxide aralkyl hydroperoxides e.g. of 7—13 carbon atoms such as benzyl hydroperoxide or dialkyl peroxides e.g. of 4 to 20 carbon atoms such as di (tert. butyl) peroxide, di (aralkyl) peroxide e.g. of 14 to 26 carbon atoms such as di benzyl peroxide, chlorate salts such as sodium chlorate, permanganate salts such as potassium permanganate. Other suitable compounds are azo initiators.

The chain terminator is a compound capable of modifying transferring or terminating free radical chains. Such compounds are known per se for this purpose with olefinic monomers and are described for example in the Blackley text book (referred to above) pages 329—379. Preferred are thiol compounds e.g. with 1 or 2 thiol groups such as alkyl thiols of 1—8 carbon atoms, optionally with at least one hydroxyl and/or amino and/or carboxylic acid group, such as hydroxy alkane thiols (or amino alkane thiols) with 1—3 hydroxyl (or amino) group, 1 or 2 thiol group and 2—4 carbon atoms and no OH and/or $NH_2$ and/or SH groups attached to the same carbon atoms, such as 2-mercaptoethanol, 2-mercaptoethyl amine or thioglycerol, or mercapto alkane carboxylic acids of 1—6 carbon atoms with 1 or 2 carboxylic acid groups and 1 or 2 thiol groups attached to different carbon atoms, such as thioglycollic and 2 or 3 mercaptopropionic acid and thiomalic acid.

The initiator and terminator are usually soluble in acrylic acid and/or water; they are, if possible, added in aqueous solution. Any comonomer is preferably dissolved in the acrylic acid for addition to the loop reactor.

Advantageously the initiator is used with a reducing agent to form a redox system, also as described in Blackley; thus peroxides may be used in conjunction with small amounts of transition metals such as iron, and chlorates or peroxydisulphates are preferably used with bisulphites such as sodium metabisulphite. The most preferred initiator is the redox combination of a water soluble chlorate salt and a water soluble sulphur oxy compound derived from sulphurous acid, especially sodium chlorate and sodium metabisulphite. Molar proportions of chlorate to metabisulphite of 0.5—3.0:1 e.g. 0.9 to 2.5:1 are preferred. While metabisulphites are preferred, an equivalent amount of other sulphur oxy species derived from sulphurous acid may be used. These species are usually an ionic species from sulphurous acid or its anhydride or a precursor therefor. Thus sulphurous acid itself or gaseous sulphur dioxide may be added as such, but preferably water soluble salts thereof are used, e.g. ammonium or alkali metal such as potassium or sodium salts. The salts may be sulphites or bisulphites (or hydrogen sulphites) or the anhydrides thereof namely metabisulphites e.g. $Na_2S_2O_5$ which form bisulphite in solution. Precursors of the bisulphites such as dithionites, which also form bisulphite in solution may be used.

Hereafter in this specification, reference will be made to metabisulphites, but this is only for purposes of exemplification. Furthermore it is to be understood in this specification (including the claims) that, while reference is made to metabisulphites and molar ratios relating hereto, the species in the polymerization medium and in the solution of metabisulphite is probably the corresponding bisulphite, one mole of metabisulphite forming 2 moles of bisulphite, and hence where reference is made hereto to metabisulphites, bisulphites themselves or sulphites, sulphurous acid or sulphur dioxide or dithionites should also be understood in double the given molar amounts.

Preferably the initiator and terminator are in particular combinations e.g. one of thiol containing compounds with peroxy compounds such as persulphates, or the chlorate/bisulphite combination.

The molar proportion of terminator to monomer usually governs the absolute size of $M_w$, and the spread of molecular weights i.e. Mw/Mn, a higher proportion giving lower molecular weight compounds and a narrower spread i.e. lower Mw/Mn and a lower proportion giving higher molecular weight compounds and a wider spread. Usually an amount of 0.1—20 such as 0.5—20 mole % e.g. 1—20% such as 1—15% e.g. 0.5—4%, or 4—20 % 4—12% such as 4—8% or 8—15% mole % of terminator (or thiol group therein) to monomer is used; thus with mercaptoethanol or thioglycollic acid a weight % of 1—20% e.g. 4—12 or 10—15% (based on the weight of acrylic acid as the sole monomer) may be used. Preferably in the process of the invention the monomer is acrylic acid, the initiator sodium chlorate and sodium metabisulphite, the chain terminator is 2-mercaptoethanol, present in a molar percentage relative to acrylic acid of 4—20%.

The proportion of initiator to monomer also normally governs the absolute size of Mw and the spread of molecular weights, again a higher proportion giving lower molecular weights and a narrower spread. But the proportion of initiator to monomer also governs the rate at which monomer is consumed and hence the degree to which monomer has been consumed in the polymerization by the average time the product portion is removed i.e. the residence time. For residence times of 120—2400 sec (2—40 mins), the percentage of the total number of moles of initiator or initiators to moles monomer is usually 0.1—5% e.g. 0.5—2.5%, or 1—2% particularly for persulphates and the chlorate/metabisulphite combination.

But it has been found that with molar proportions of chlorate to metabisulphite of greater than 1:1 e.g. 2—100:1 such as 3—20:1 or 4—10:1, it is possible to reduce significantly the rate of evolution of heat produced during the polymerization operation thereby enabling it to be controlled more easily and/or enabling the throughput of the loop to be increased. Use of these low proportions of metabisulphite to chlorate often gives rise to very low proportions of unreacted monomer in the polymeric product portion. Surprisingly, even with a reduced total concentration of chlorate/bisulphite (which would normally tend to increase the polymer molecular weight and spread of molecular weights), the molecular weight of the polymer and spread of molecular weights can be maintained, the size and spread depending on the amount of chain transfer agent. The total molar percentage of chlorate and metabisulphite (based on the number of moles of monomer component) is preferably up to 5% e.g. 0.5—4% such as 1.5—3.5% with a molar percentage of chlorate (based on the number of moles of monomer component) of up to 4% e.g. 0.3—3.5 such as 1—3.0%. The chlorate and metabisulphite (or bisulphite) salts may each be ammonium, sodium or potassium salts or mixtures thereof. Still higher molar percentages of chlorate in association with low proportions of chlorate to metabisulphite (e.g. 0.5—2:1) and very low free monomer concentrations tend to give hazy, smelly polymeric product portions, which can usually be avoided by use of lower total initiator concentration and a higher proportion of chlorate to metabisulphite e.g 7:1 associated with an increase in the free monomer concentration.

The monomer component, initiator and terminator are mixed with an aqueous recycled mixture comprising a water soluble polymer of said monomer component, prepared earlier. The mixture usually contains at least 35% e.g. 25—65% by weight of said polymer, and preferably at least 40% such as 40—55% by weight of polymer. The mixture usually contains up to 5% by weight unreacted monomer component e.g. 0.005—5% such as 0.1—5% e.g. 0.5—2% or 0.005—0.7% of said component and may contain up to 10ppm iron, e.g. up to 5ppm. The solvent for the polymer is usually substantially only water, but may contain up to 20% by weight of a water miscible organic solvent such as acetone, methanol ethanol, isopropanol or methylated spirits or a lower glycol or polyol of 2—6 carbon atoms e.g. ethylene glycol, or glycerol, or an hydroxy ethylenated alkanol or glycol e.g. diethylene glycol or ethylene glycol mono methyl or ethyl ether. Lower alcohols, such as isopropanol also act as chain transfer agents, though usually in amounts of 20—80 mole % (based on the number of moles of monomer component). The polymerization is usually performed at pH 0.5—4.0 e.g 1—2.5.

The monomer component, initiator and terminator may be mixed in any convenient way with the aqueous recycled mixture. Thus each, usually in aqueous solution, may be added separately and sequentially with the terminator added before the initiator, while the monomer may be added in any order relative to the initiator and terminator; with sequential addition the initiator is preferably last and the monomer first. All three reagents are best added to the mixture simultaneously e.g. into the loop at the same place or preferably in a multi feed mixer. For uniform consistent operation uniform feeding of reagents is desirable e.g. continuous feeding at a constant rate or in-phase pulsed feeding at a constant ratio of ingredients. If desired extra water or other solvent for the polymerization may be added to the loop e.g. via the multi feed mixer.

The polymerization is very exothermic and the heat produced is removed by cooling e.g. in a heat exchanger. The cooling may be before, and/or after the separation of the product portion and remaining portion.

In this separation the majority of the reaction mixture comprising polymer is recycled for mixing with fresh monomer, initiator and terminator, while a minority is removed as the product portion of the desired polymer product. The recycle ratio of remaining portion to product portion is at least 50:1 e.g. 50:1 to 5000:1 such as at least 100:1 e.g. 150:1 to 4000:1.

The polymerization may be carried out in a loop apparatus comprising at least one inlet for the feed components, i.e. monomer initiator and terminator and any reducing agent, a pump, a mixer (which may be omitted if the pump can also act as a mixer), a heat exchanger as cooler and outlet for the product portion, the inlet, pump, heat exchanger and outlet being joined together by a pipe to form a loop. Preferably the inlet for the initiator is the last inlet before the mixer in the direction of flow of aqueous mixture, or is part of or integral with the mixer. Advantageously the loop apparatus comprises a loop pipe having in order of the direction of flow of liquid (a) separate inlets for monomer component, terminator and one or more initiators, (b) and mixer, (c) the pump (d) the heat exchanger (e) the outlet, the inlets being upstream of an integral with said mixer. Preferably all the feed components have their inlets into the same mixer in the loop. The mixer may be upstream or downstream of the pump which creates turbulence in the liquid passing through it. Examples of types of mixer are centrifugal mixers, static in line mixers, pin disc mixers, orifice plate mixers or alternatively a mixer according to British Patent 1563995 may be used. Examples of types of pump are centrifugal pumps, gear pumps and lobe pumps. Preferably the pump is the mixer, e.g. a centrifugal pump with feed of the reagents into the pump inlet. Examples of types of heat exchanger are simple and multiple surface exchangers and coil exchangers, preferably of the thin film type as in plate heat exchangers.

The exit line from the loop reactor may be controlled to step the loop under less than atmospheric, substantially atmospheric or more than atmospheric pressure e.g. up to 294.2kNm$^{-2}$ (3kg/cm$^2$), as far as

externally applied vacuum or pressure to the loop is concerned. Preferably, with an exit line at the highest point of the loop reactor, there is substantially no externally applied pressure or vacuum, i.e. the product portion overflows out of the exit line.

The average residence time in the loop is 60—3600 sec (1—60 min) e.g. 120—2400 sec (2—40 min) and increasing the residence time usually increases the degree of conversion. The average reaction temperature is 40—140° usually 50—100°C or 75—110°C such as 90—105°C, usually with less than 10°C e.g. less than 5°C between the temperature of the liquid anywhere in the loop; pressure is applied to the loop reactor as necessary at the higher temperatures to keep the polymerization medium liquid.

The average residence time and the circulation rate and nature and amount of monomer component, initiator and terminator are usually chosen so that at least 90% e.g. at least 95 or 98% of the polymerization occurs within the average residence time as this usually results in the narrowest molecular weight distributions.

The product portion removed from the loop comprises an aqueous solution of the polymer, and usually unreacted monomer, with an analysis the same as that of the recycled mixture. However often the polymerization is not quite complete at the time of removal of the product portion and in this case a further ageing period of 36—18000 sec (0.01—5 hrs), such as 1800—7200 sec (0.5—2 hrs) or 120—3600 sec (2—60 mins) e.g. 900—2700 sec (15—45 mins) at 50—110°C e.g. 75—110°C may be adopted, advantageously without addition of further initiator, though, in order to reduce the concentration of residual oxidant, e.g. sodium chlorate, the reductant part of a redox initiator e.g. sodium metabisulphite may be added after or during or instead of the aging. Reduced residual oxidant is often desirable when the polyacrylate product is used in association with oxidizable compounds in water treatment.

The product polymer, a homo or copolymer of acrylic acid may be isolated e.g. by precipitation with an organic solvent but is usually sold as such in aqueous solution, or after concentration to at least 50% concentration if desired, though this is often not necessary.

The aqueous polymer mixture which may otherwise be at pH2—4 may be treated by addition thereto of base e.g. ammonia or an alkali metal (e.g. sodium) hydroxide or carbonate or an alkanolamine such as aqueous sodium hydroxide to form at least partly neutralised derivative of the polymer e.g. in the form of an aqueous solution of a salt of the polymer e.g. one containing 35—65% or 35—55% e.g. 40—55% by weight of said salt, at a pH of 6—8 or higher, preferably 6.5—7.2. Thus 5—20% or 70—90% of the acid groups in the polymeric acid may be neutralised.

Preferably at a time before neutralization with the base, a thiol-free complexing agent for iron such as a water soluble di, tri or tetra carboxylic acid or salt (e.g. a sodium salt) thereof, usually an aliphatic one with 2—10 carbon atoms and an amino, imino or nitrilo or hydroxyl substituent or substituents such as ethylene diamine tetracetic acid gluconic acid or nitrilo acetic acid is present in the solution in amount up to 500 ppm e.g. 10—100 ppm; the complexing agent may be added with the base or between adding base and exit from the loop or into the loop e.g. with any or every feed into the loop.

Advantageously in the process of the invention, in a continuous process aqueous sodium chlorate and sodium metabisulphite in molar amounts, whose sum is 0.5—4% (relative to the molar amount of monomer) and whose ratio is 3—10:1, and acrylic acid and mercaptoethanol are continuously passed into a recycled aqueous mixture comprising 35—65% recycled polyacrylic acid and reaction is performed at 80—100°C to form an aqueous reaction mixture, of which a product portion comprising polyacrylic polymer is removed, and the remaining portion recycled, the product portion being preferably subsequently treated with further sodium metabisulphite and then at least partly neutralised.

The polymer made by the process of the invention is a water soluble homo polymer of acrylic acid, or copolymer of acrylic acid and up to 30 mole% of a copolymerizable monomer (based on the total molar amount of acrylic acid and copolymerizable monomer). The polymer may have free carboxyl groups or at least some of them such as substantially all of them may be in the form of carboxylate groups, with associated ammonium, alkali metal or alkanolamine of 2—8 carbons such as mono, di and tri ethanolamine) cations, so that the polymer is soluble in water at 40% concentration at pH 6—8. The polymer is preferably in the form of its sodium salt. The sodium salt form of the polymer at pH 7.2 in 42% aqueous concentration usually has a weight average molecular weight $M_w$, and number average molecular weight $M_n$, which are related according to the function $M_w/M_n = (a\, M_w) + b$, where a is $0.1 \times 10^{-5}$ to $7 \times 10^{-5}$, and b is 1—1.8. $10^5_a$ is 0.1—7, e.g. 0.5—4.5 and especially 1—3, or 3—7 while b is 1—1.8 e.g 1.2—1.7 and especially 1.4—1.7 or 1.0—1.4. $M_w$ is usually less than 100,000 and usually up to 60,000, and while it may be from 30,000 to 60,000 it is preferably less than 30,000 e.g. less than 25,000 such as 1000—30,000 or 1000—25000, e.g. 1000—4000 for water treatment uses 4000—10,000 for suspending minerals and 10,000—18,000 for pumpable slurries. All weight average, number average and third order molecular weights in this specification are values obtained by gel permeation chromatography by comparison with dextran standards obtained from Pharmacia, Upsala, Sweden and monomeric pure chemicals. For polymers with $M_w$ below 25,000, the value of $M_w$ divided by $M_n$ is usually less than 2.3, e.g. less than 2.2 such as 1.3—2.2 (or 1.3—2.0) and usually 1.5—1.8 or 1.6—1.9. particularly for products of $M_w$ of 1000—10000 or 2000—11000 especially 2000—7000. For polymers with $M_w$ of 25,000 to 60,000 the value of $M_w/M_n$ is usually 2—3.5. For polymers of $M_w$ up to 20,000, the value of $M_z$ (the third order molecular weight) to $M_w$ is often less than 2.0 e.g. less than 1.9 such as 1.3—2.0 or 1.5—1.9. Polymers with a particularly preferred combination have $M_w/M_n$ of 1.6—1.9 and $M_z/M_w$ of 1.5—1.9. Advantageously the sum

of $M_w/M_n$ and $M_z/M_w$ is 2.6—4.0 in particular 3—3.9 and especially 3.4—3.9 or 3.4—3.8, all particularly for polymers with Mw below 25,000.

The polymers may also be characterised by their viscosity average molecular weights ($M_v$), which are absolute figures and do not need to be related by comparison with standards. $M_v$ is obtained from the kinematic viscosities of aqueous solutions of sodium salts of the polymer of various known concentrations from the kinematic viscosity, the specific viscosity, viscosity number, intrinsic viscosity were obtained and, hence $M_v$ by use of the Mark-Houwink equation. Values of $M_v$ for the polymers of the invention are usually 300—50,000 e.g. 300—20,000 such as 300—4000; values of 300—1000 for $M_v$ for water treatment uses and 1000—4000 for $M_v$ for mineral processing uses are preferred.

The lower molecular weight ($M_w$) polymers are particularly useful in water treatment for boilers, cooling water, desalination plants and oil well flooding where they act as inhibitors of the deposition of insoluble inorganic solids e.g. scale and/or sea water solids; amounts of polymer of 5—500 e.g. 10—60 ppm may be used, preferably mixed with aceto diphosphonic acid in a 3:1 ratio. The medium molecular weight polymers (4000—10,000 $M_w$) may be used in the refining of minerals e.g. China Clay, in which refining they act as dispersants or deflocculants; amounts of 0.001—2% e.g. 0.002—1% of polymer based on dry mineral weight may be used. The higher molecular weight polymers ($M_w$ 10,000—18,000) may be used in the dispersion of fillers, pigments and minerals in aqueous systems to yield slurries of high solids contents, these slurries being stable and capable of being pumped; amounts of 500—18000 ppm polymer based on total slurry may be used. All the polymers, including those of the highest molecular weight can be used in the refining of talc (using procedures as described in our UK Patent No. 2019822) and with amounts of 0.1—2% e.g. 0.2—1% polymer (based on dry talc) and use in detergents as anti redeposition agents and/or sequestering agents for calcium and magnesium.

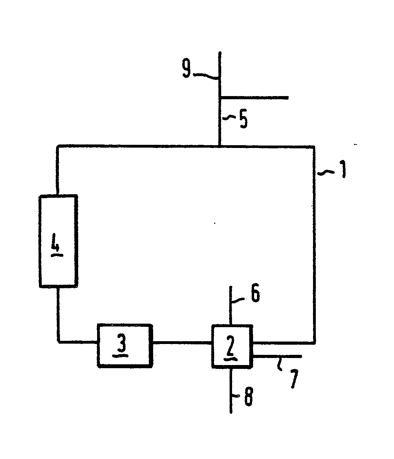

The invention may be performed in an apparatus as illustrated in the accompanying drawing in which a line 1 is a loop line joining mixer 2, a pump 3, a heat exchanger 4 and an outlet 5 into a loop. Into mixer 2 are three feed lines 6, 7 and 8 for monomer, initiator and terminator respectively. The pump 3 and mixer 2 may be the same piece of apparatus combining both functions e.g. a centrifugal pump. A vent 9 is present at the uppermost part of the outlet 5, but may be in the uppermost part the loop (preferably near outlet 5). In use monomer initiator and terminator pass from lines 6, 7 and 8 into mixer 2 where they meet aqueous recycled mixture comprising polymer in line 1 and the liquids obtained are passed to pump 3 and pumped through exchanger 4 to cool them prior to separation of a product portion through outlet 5 and recycle of the remaining portion round line 1 and back to mixer 2. Any gases produced in the polymerization or resulting from the feed components are vented from the loop via vent 9.

In a modification of the apparatus illustrated, there are 4 feed lines 6, 7, 7A and 8 for monomer, the oxidant part of a redox initiator, the reductant part of a redox initiator and terminator.

The invention is illustrated in the following Examples in which the concentrations of ingredients e.g. 0.35M are expressed as molalities e.g. 0.35g moles per kg of solution

Examples 1—11

An apparatus as illustrated in the accompanying drawing but modified to have 4 feed lines 6, 7, 7A and 8 into the mixer was used with an extra heat exchanger as cooler between outlet 5 and mixer 2 in the direction of flow of the liquid in line 1. A reciprocating pump performed the functions of mixer and pump. Feed line 7A was used for sodium metabisulphite solution when sodium chlorate solution was passed via feed line 7; when ammonium persulphate was the initiator, it was passed via line 7, and line 7A was not used.

In each Example the monomer was glacial acrylic acid (containing 200ppm hydroquinone monomethyl ether and less than 1% by weight water) and the initiator, chain transfer agent (also called chain terminator) and accelerator (if any) were added in aqueous solution. The initiators were sodium chlorate (NC) or ammonium persulphate (APS), the accelerator sodium metabisulphite (BS) and the chain terminators thioglycollic acid (TGA) or mercaptoethanol (ME) mercapto succinic acid (MSA) or thioglycerol (TGL). The parameters of the process in each Example are given in Tables 1 and 3. The mole % of chain transfer agent and initiator were based on the molar amount of monomer. The molar proportions of NC to BS (as Na2S205) were 1.78:1 in Ex. 1, 2 and 9 and were 6.2:1 in Ex. 3, 4 and 8 and 1.33:1 in Ex. 10 and 1.20:1 in Ex. 11. The product portion was collected and was treated with 47% aqueous sodium hydroxide solution to pH 7.0—7.5 to give a solution of the sodium polyacrylate polymer of 40—43% wt. concentration with a molecular weight distribution and free monomer content (in the sodium polyacrylate solution) as given in Tables 2 and 4.

The properties of the products of Ex. 1—9 are compared in Table 2 with those of commercially available sodium polyacrylate polymers in Ex. A—E.

Examples 12—22

On a pilot plant scale, the processes of Examples 1—11 were repeated with apparatus as shown in the accompanying drawing but modified as in Ex. 1—11, with average loop temperatures of 80—85°C, a centrifugal pump performing the functions of pump and mixer, and the feeding separately but in phase into the loop of the 4 components, aqueous sodium chlorate solution aqueous sodium metabisulphite solution, acrylic acid and chain transfer agent (thioglycollic acid TGA solution or 2-mercapto ethanol ME solution), a recycle ratio of 257:1 and apart from Ex. 13 and 17 each feed contained 50 ppm of di sodium ethylene diamine tetracetic acid salt. The sodium polyacrylate polymer solution contained 40—50% by weight of the polymer.

Details and Results were as shown in Tables 4 and 5.

Examples 23—25

The processes of Ex. 12—22 were repeated with average loop temperatures of 95°C. The degree of conversion to polymer was 96.2% in Ex. 23 and 99.2% in Ex. 24, the residence times 882 sec (14.7 min), 888 sec (14.8 min), and 954 sec (15.9 min). respectively for Ex. 23—25 and the molar ratios NC:BS 9.47:1, 1.35:1 and 3.8:1 respectively. Details and Results were as shown in Tables 4 and 6.

TABLE 1 Process parameters

| Ex | Amount mol %<br>Initiator | Amount mol %<br>Chain transfer agent | Average loop temp°C | Average residence time sec(min) | Recycle ratio | Total 10$^{-5}$k g/sec (g/min) | Acrylic acid mol/sec (mol/min) | Initiators mol/sec (mol/min) | Initiators mol/sec (mol/min) | Chain transfer agent mol/sec (mol/min) |
|---|---|---|---|---|---|---|---|---|---|---|
| | | | | | | | | Feed rates | | |
| 1 | NC-1.18<br>BS-0.66 | 8.48 TGA | 82 | 738 (12.3) | 110:1 | 86.2 (51.7) | 0.00653 (0.392) | 0.0000783 (0.0047)NC (as 0.35 M solutions) | 0.0000433 (0.0026)BS (as 1.23 M solutions) | 0.000585 (0.0351) (as 3.78M solution) |
| 2 | NC-1.18<br>BS-0.66 | 3.6 TGA | 80.5 | 738 (12.3) | 110:1 | 86.2 (51.7) | 0.00653 (0.392) | 0.0000783 (0.0047)NC (as 0.35 M solutions) | 0.0000433 (0.0026)BS (as 1.23 M solutions) | 0.0000233 (0.014) (as 1.52 M solution) |
| 3 | NC-1.18<br>BS-0.19 | 9.4 ME | 80 | 780 (13) | 117:1 | 81.3 (48.8) | 0.00632 (0.379) | 0.000075 (0.0045) NC (as 0.35 M solution) | 0.0000113 (0.00068) BS | 0.0000017 (0.000102) (as 4.48 M solution) |
| 4 | NC-1.18<br>BS-0.19 | 1.9 ME | 72 | 780 (13) | 117:1 | 81.3 (48.8) | 0.00632 (0.379) | 0.000075 (0.0045)NC (as 0.35 solution) | 0.0000113 (0.00068)BS | 0.000597 (0.0358) (as 0.9 M solution) |
| 5 | APS 1.2 | 11.78 ME | 76.4 | 774 (12.9) | 116:1 | 82.8 (49.7) | 0.00642 (0.385) | 0.0000833 (0.005) APS (as 0.29 M solution) | — | 0.0007 (0.042) (as 9.08 M solution) |
| 6 | APS 1.29 | 3.67 ME | 86.4 | 774 (12.9) | 116:1 | 80.1 (48.06) | 0.00622 (0.373) | 0.0000833 (0.005) APS (as 0.29 M solution) | — | 0.0002 (0.012) (as 2.98 M solution) |
| 7 | APS 1.32 | 8.44 TGA | 85 | 774 (12.9) | 116:1 | 82.7 (49.62) | 0.00638 (0.383) | 0.0000887 (0.00532) APS (as 0.4 M solution) | Make up water 0.0039 (0.234) M | 0.000617 (0.037) (as 8.09 M solution) |
| 8 | NC 1.18<br>BS 0.19 | 5.66 ME | 80 | 780 (13) | 117:1 | 81.3 (48.8) | 0.00632 (0.379) | 0.000075 (0.0045)NC (as 0.35 M solution) | 0.0000113 (0.00068)BS (as 1.23 M solution) | 0.000367 (0.22) (as 2.68 M solution) |
| 9 | NC 1.18<br>BS 0.66 | 5.39 TGA | 81 | 738 (12.3) | 110:1 | 86.2 (51.7) | 0.00653 (0.392) | 0.0000783 (0.0047) (as 0.35 M solution) | 0.0000433 (0.0026)BS (as 1.23 M solution) | 0.00035 0.021 (as 2.68 M solution) |

TABLE 2
Products

| Examples | $\overline{M_n}$ | $\overline{M_w}$ | $\overline{M_z}$ | $\overline{M_w}/\overline{M_n}$ | $\overline{M_z}/\overline{M_w}$ | wt % free monomer |
|---|---|---|---|---|---|---|
| 1. | 3502 | 6529 | 11338 | 1.86 | 1.73 | 1.56 |
| 2. | 7520 | 15435 | 25082 | 2.05 | 1.63 | 5.2 |
| 3. | 3255 | 5737 | 10529 | 1.76 | 1.83 | 0.46 |
| 4. | 12313 | 24410 | 37067 | 1.98 | 1.51 | 5.85 |
| 5. | 4836 | 8784 | 15339 | 1.82 | 1.75 | 4.57 |
| 6. | 2680 | 4869 | 8503 | 1.81 | 1.75 | 0.98 |
| 7. | 2016 | 3564 | 6129 | 1.77 | 1.72 | 1.2 |
| 8. | 4390 | 8730 | 15543 | 1.98 | 1.78 | 0.91 |
| 9. | 4999 | 9882 | 16995 | 1,97 | 1.72 | 3.0 |
| A. | 2702 | 7523 | 19487 | 2.78 | 2.59 | |
| B. | 2621 | 6474 | 13315 | 2.47 | 2.05 | |
| C. | 2782 | 7164 | 13987 | 2.57 | 1.95 | |
| D. | 3210 | 8425 | 18231 | 2.62 | 2.16 | |
| E. | 4663 | 16072 | 38284 | 3.44 | 2.38 | |

TABLE 3

| Ex | Amount mol % Initiator | Chain transfer agent | Average loop Temp°C | Average residence time sec (min) | Recycle ratio | Total $10^{-5}$kg/sec (g/min) | Acrylic acid mol/sec (mol/min) | Initiators mol/sec (mol/min) | mol/sec (mol/min) | Chain transfer agent mol/sec (mol/min) |
|---|---|---|---|---|---|---|---|---|---|---|
| 10 | NC-2.19 BS-1.64 | 4.24MSA | 85 | 858 (14.3) | 138:1 | 48.8 (29.3) | 0.00342 (0.205) | 0.0000733 (0.0044)NC (as 1.87M solution) | 0.000055 (0.0033)BS (as 1.31M solution) | 0.000108 (0.0065)MSA (as 0.785M solution) |
| 11 | NC-1.96 BS-1.63 | 5.65TGL | 86 | 858 (14.3) | 138:1 | 49.5 (29.7) | 0.00333 (0.20) | 0.000065 (0.0039)NC (as 1.87M solution) | 0.000055 (0.0033)BS (as 1.31M solution) | 0.000183 (0.011)TGL (as 0.785M solution) |

**0 097 495**

TABLE 4
Product obtained

| | | | | | | wt % Free monomer in | |
| Examples | Mn | Mw | Mz | Mw/Mn | Mv | polymer as acid | polymer as salt |
|---|---|---|---|---|---|---|---|
| 10 | 4379 | 8321 | 13170 | 1.90 | | 4.0 | 2.5 |
| 11 | 4516 | 6284 | 8508 | 1.39 | | 0.75 | 0.32 |
| 12 | 2168 | 3820 | | 1.76 | | 0.37 | 0.05 |
| 13 | 2687 | 4017 | | 1.49 | | 0 | 0 |
| 14 | 3191 | 5077 | | 1.59 | | 0.1 | 0 |
| 15 | 2584 | 4349 | | 1.68 | | 0.04 | 0.01 |
| 16 | 1504 | 2794 | | 1.85 | | 0.53 | 0.35 |
| 17 | 2181 | 3809 | | 1.75 | 1071 | 0.20 | 0.14 |
| 18 | 2588 | 4392 | | 1.69 | 2064 | 0.35 | 0 |
| 19 | 3303 | 5876 | | 1.77 | 2581 | 0.084 | 0.054 |
| 20 | 9662 | 21389 | | 2.21 | 5011 | 0.99 | 0.14 |
| 21 | 18352 | 49102 | | 2.67 | 5867 | 3.42 | 1.12 |
| 22 | 18215 | 55675 | | 3.05 | 15242 | 1.39 | 0.08 |
| 23 | 32161 | 217101 | | 6.75 | 38298 | | 0.95 |
| 24 | 19543 | 127663 | | 6.53 | 30357 | | 0.24 |
| 25 | | 3147 | | 1.62 | 630 | 0.03 | <0.05 |

11

TABLE 5

| Ex | Amount mol % based on acrylic | | Mole ratio NC:BS | NC | BS | Molality of feed solutions | | Residence time sec (min) |
|----|-----------|-------------------|---------------|------|-------|-----------------------|------|-------------------|
| | Initiator | Chain transfer agent | | | | Chain transfer agent | | |
| 12 | NC 2.34 BS 1.74 | 6.93 TGA | 1.35:1 | 1.34 | 0.75 | 5.43 | | 900 (15.0) |
| 13 | NC 1.98 BS 0.76 | 6.41 TGA | 2.62:1 | 1.34 | 0.75 | 5.43 | | 870 (14.5) |
| 14 | NC 2.02 BS 0.34 | 5.97 TGA | 6.02:1 | 1.34 | 0.128 | 5.43 | | 810 (13.5) |
| 15 | NC 1.94 BS 0.28 | 5.67 TGA | 6.92:1 | 0.59 | 0.128 | 5.43 | | 888 (14.8) |
| 16 | NC 2.01 BS 1.86 | 9.03 ME | 1.39:1 | 1.34 | 0.75 | 6.4 | | 948 (15.8) |
| 17 | NC 2.28 BS 0.33 | 8.20 ME | 6.85:1 | 1.34 | 0.128 | 6.4 | | 840 (14.0) |
| 18 | NC 1.89 BS 0.25 | 5.16 ME | 7.69:1 | 1.34 | 0.128 | 6.4 | | 900 (15.0) |
| 19 | NC 1.96 BS 0.25 | 3.52 ME | 7.73:1 | 1.34 | 0.128 | 6.4 | | 930 (15.5) |
| 20 | NC2.29 BSO.299 | 1.95 ME | 7.66:1 | 1.34 | 0.128 | 2.13 | | 900 (15.0) |
| 21 | NC2.34 BS 0.361) | 1.1 ME | 6.48:1 | 1.34 | 0.202 | 2.13 | | 888 (14.8) |
| 22 | NC2.12 BS 0.341 | 0.99 ME | 6.23:1 | 1.34 | 0.128 | 2.13 | | 870 (14.5) |

TABLE 6

| Example | Amount mol % | | Feed rates | | | |
|---------|-----------|------|-----------|---------|---------|-------------------------|
| | Initiator | Chain transfer agent | Acrylic acid mol/sec (mol/min) | Initiators | | Chain transfer agent mol/sec (mol/min) |
| | | | | mol/sec (mol/min) | mol/sec (mol/min) | |
| 23 | NC-3.44 BS-0.363 | 0.48 ME | 0.0902 (5.41) | 0.0031 (0.186)NC (as 1.34M solution) | 0.000325 (0.0195)BS (as 1.17M solution) | 0.000433 (0.26) (as 0.21M solution) |
| 24 | NC-2.5 BS-1.85 | 0.51 ME | 0.127 (7.63) | 0.00317 (0.19) NC (as 1.34M solution) | 0.000235 (0.0141)BS (as 0.75M solution) | 0.000653 (0.0392) (as 0.25M solution) |
| 25 | NC-1.44 BS-0.38 | 9.77ME | 0.1778 (10.67) | 0.00257 (0.154)NC (as 1.34M solution) | 0.000675 (0.0405)BS (as 0.128M solution) | 0.0173 (1.04) (as 6.4M solution) |

Examples 26 and 27

Products before neutralisation from Ex. 18 and 20 were treated with further sodium metabisulphite solution to react with the free chlorate content of the products. Addition of molar amounts of 0.41:1 and 1.05:1 of sodium metabisulphite to the sodium chlorate in the products reduced the residual chlorate contents in the polyacrylic acid solutions from 0.78% to 0.64% wt, and 0.19% to 0% wt% respectively.

Test results

Polyacrylate salts prepared in the above Examples were tested as deflocculants of slurries of kaolin. These slurries contain kaolin, mica and sand, and the deflocculants are added to cause separation of the mica and sand without affecting the kaolin. Two different kaolin slurries from different mines which need different amounts of deflocculants were treated with the polyacrylate salts above, according to the following procedure. A series of stoppered measuring cylinders 0.0002 m³, (200 mls) were taken and 0.00015 m³ (150 mls) of each slurry, with the pH adjusted to 8.5 with sodium hydroxide, were added to each cylinder. The amount of polyacrylate solution being tested was then added. Each cylinder was then shaken vigorously and allowed to stand for 1800 sec (20 minutes). A visual inspection was then made of the deposits in the cylinder. The minimum level of deflocculant which gave a clear hard deposit was taken as the effective level.

The test is subjective and in an attempt to give a quantitative assessment the slurries were rated on a scale where "0" corresponds to very little or no separation of mica/sand, and "10" to a clear hard deposit of mica/sand.

The results were as follows, the dosage rate being the weight (in kg.) of sodium polyacrylate solution prepared in the give Example, expressed as a percentage of the volume (in m³). of the slurry, the figures in brackets for the dosage rate being the weight in g of the solution expressed as a percentage of the volume (in Mls) of the slurry.

Slurry A

| Example No. | 8 | 3 | 1 | 9 | 2 |
|---|---|---|---|---|---|
| Dosage rates | | | Ratings | | |
| 0.25% (0.00025%) | 1 | 1 | 1 | 1 | 1 |
| 0.50% (0.00050%) | 4 | 2 | 2 | 6 | 6 |
| 0.75% (0.00075%) | 10 | 10 | 9 | 10 | 10 |
| 1.0% (0.00100%) | 10 | 10 | 10 | 10 | 10 |

Slurry B

| Example No. | 17 | 18 | 19 |
|---|---|---|---|
| Dosage rate | | Ratings | |
| 1.4% (0.0014%) | — | 3 | — |
| 1.5% (0.0015%) | 3 | 3 | 4 |
| 1.6% (0.0016%) | 3 | 4 | 4 |
| 1.7% (0.0017%) | 5 | 8 | 8 |
| 1.8% (0.0018%) | 6 | — | 8 |

**Claims**

1. A process for preparing a polymer from monomer comprising acrylic acid, in which the monomer is polymerized in the presence of a free radical initiator characterised in that in a continuous process, a monomer component, which comprises at least 70 molar % of acrylic acid and optionally up to 30 molar % of a copolymerizable monomer, a free radical initiator and a free radical chain terminator are passed into a loop reactor in which they are mixed with a recycled aqueous mixture comprising a water soluble polymer of said monomer component, and are reacted therein to form an aqueous reaction mixture comprising the water soluble polymer of said monomer component, and a product portion of said reaction mixture is removed as a solution of water soluble polymer product leaving a remaining portion and said remaining portion is recycled as said recycled aqueous mixture for mixing again with said monomer component initiator and terminator, said aqueous reaction mixture and/or said remaining portion being cooled and the ratio of said remaining portion to said product portion being at least 50:1.

2. A process according to claim 1 characterised in that the free radical initiator is the redox combination of a water soluble chlorate salt and a water soluble sulphur oxy compound derived from sulphurous acid.

3. A process according to claim 2 characterised in that the initiator is sodium chlorate and sodium metabisulphite.

4. A process according to any one of claims 1—3 characterised in that the chain terminator is a thiol compound.

5. A process according to claim 4 characterised in that the thiol compound is mercaptoethanol.

6. A process according to any one of claims 1—5 characterised in that said recycled aqueous mixture contains 35—65% by weight of polymer.

7. A process according to any one of claims 3—6 characterised in that the initiator is a chlorate salt and a metabisulphite salt in a molar ratio of 3—20:1.

8. A process according to any one of claims 3—7 characterised in that the total molar percentage of chlorate and metabisulphite to monomer component is 0.5—4%.

9. A process according to any one of claims 4—8 characterised in that the monomer is acrylic acid, the initiator sodium chlorate and sodium metabisulphite, the chain terminator is 2- mercaptoethanol, present in a molar percentage relative to acrylic acid of 4—20%.

10. A process according to any one of claims 1—9 characterised in that the polymer is prepared in a loop apparatus comprising a loop pipe having in order of the direction of flow of liquid, (a) separate inlets for monomer, terminator and one or more initiators, (b) a mixer, (c) a pump, (d) a heat exchanger (e) an outlet for the product portion, said inlets being upstream of or integral with said mixer.

11. A process according to any one of claims 1—10 characterised in that at least 90% of polymerisation occurs within the average residence time in the loop.

12. A process according to any one of claims 1—11 characterised in that the ratio of said remaining portion to said product portion is 150:1 to 4000:1.

13. A process according to any one of claims 1—12 characterised in that the polymerization is performed in the presence of a thiol free complexing agent for iron.

14. A process according to any one of claims 1—13 characterised in that the water soluble polymer product in the product portion is treated with base to form an at least partly neutralised salt thereof.

15. A process according to any one of claims 1—14 characterised in that in a continuous process aqueous sodium chlorate and sodium metabisulphite in molar amounts, whose sum is 0.5—4% (relative to the molar amount of monomer) and whose ratio is 3—10:1, and acrylic acid and mercaptoethanol are continuously passed into a recycled aqueous mixture comprising 35—65% recycled polyacrylic acid and reaction is performed at 80—100°C to form an aqueous reaction mixture, of which a product portion comprising polyacrylic polymer is removed, and the remaining portion recycled.

**Patentansprüche**

1. Verfahren zum Herstellen eines Polymerisats aus Monomeren enthaltend Acrylsäure, wobei das Monomere in Gegenwert eines freie Radikale bildenden Initiators polimerisiert wird, dadurch gekennzeichnet, daß in einem kontinuierlichen Verfahren eine Monomerkomponente, die wenigstens 70 Mol-% Acrylsäure und gegebenenfalls bis zu 30 Mol-% eines copolymerisierbaren Monomeren enthält, eine freie Radikale bildender Initiator und eine freie Radikalketten abbrechende Substanz in einen Schleifenreaktor eingeleitet werden, in welchem sie mit einem rückgeführten wäßrigen Gemisch enthaltend ein wasserlösliches Polymerisat der Monomerkomponente vermischt und unter Bildung eines wäßrigen Reaktionsgemisches, enthaltend das wasserlösliche Polymerisat der Monomerkomponente, umgesetzt werden und daß ein Teil des Produkts des Reaktionsgemisches in Form einer Lösung des wasserlöslichen Polymerisatprodukts abgezogen wird, so daß eine Restmenge zurückbleibt und daß diese Restmenge als das rückgeführte wäßrige Gemisch zurückgeführt wird und erneut mit der Monomerkomponente, dem Initiator und der Radikalketten abbrechenden Substanz vermischt wird, daß das wäßrige Reaktionsgemisch und/oder die Restmenge abgekühlt werden und daß das Mengenverhältnis dieser Restmenge zur Produktmenge wenigstens 50:1 beträgt.

2. Verfahren nach Anspruch 1, dadurch gekennzeichnet, daß der freie Radikale bildende Initiator die Redoxkombination aus einem wasserlöslichen Chloratsalz und einer wasserlöslichen Schwefeloxydverbindung, abgeleitet von Schwefliger Säure, darstellt.

3. Verfahren nach Anspruch 2, dadurch gekennzeichnet, daß der Initiator Natriumchlorat und Natriummetabisulfit ist.

4. Verfahren nach den Ansprüchen 1—3, dadurch gekennzeichnet, daß die kettenterminierende Substanz eine Thiolverbindung ist.

5. Verfahren nach Anspruch 4, dadurch gekennzeichnet, daß die Thiolverbindung Mercaptoethanol ist.

6. Verfahren nach den Ansprüchen 1—5, dadurch gekennzeichnet, daß das rückgeführte wäßrige Gemisch 35 bis 65 Gew.-% Polymerisat enthält.

7. Verfahren nach den Ansprüchen 3—6, dadurch gekennzeichnet, daß der Initiator ein Chloratsalz und ein Metabilsulfitsalz im Molverhältnis 3 bis 20:1 ist.

8. Verfahren nach den Ansprüchen 3—7, dadurch gekennzeichnet, daß die gesamte prozentuale Molmenge Chlorat und Metabisulfit gegenüber der Monomerkomponente 0,5 bis 4 Mol-% beträgt.

9. Verfahren nach den Ansprüchen 4—8, dadurch gekennzeichnet, daß das Monomere Acrylsäure ist, der Initiator Natriumchlorat und Natriummetabilsulfit ist und der Kettenabbrecher 2-Mercaptoethanol ist, welcher bezüglich Acrylsäure in einer prozentualen Molmenge von 4 bis 20 Mol-% vorhanden ist.

10. Verfahren nach den Ansprüchen 1—9, dadurch gekennzeichnet, daß das Polymerisat in einer Schleifenvorrichtung hergestellt wird, bestehend aus einem schleifenförmigen Rohr, welches in der Reihenfolge in Flüssigkeitsströmungsvorrichtung (a) getrennte Einspeiseöffnungen für Monomer, Kettenabbrecher und einem oder mehreren Initiator(en), (b) einen Mischer, (c) eine Pump, (d) einen Wärmetauscher, (e) eine Austragsöffnung für den Produktteil aufweist, wobei die Einspeiseöffnungen in Strömungsrichtung gesehen oberhalb des Mischers oder als Teil des Mischers angeordnet sind.

11. Verfahren nach den Ansprüchen 1—10, dadurch gekennzeichnet, daß wenigstens 90% der Polymerisation innerhalb der Durchschnittsverweilzeit in der Schleife geschieht.

12. Verfahren nach den Ansprüchen 1—11, dadurch gekennzeichnet, daß das Mengenverhältnis des Restteils zum Produktteil 150:1 bis 4000:1 beträgt.

13. Verfahren nach den Ansprüchen 1—12, dadurch gekennzeichnet, daß die Polymerisation in Gegenwart eines thiolfreien Komplexierungsmittels für Eisen durchgeführt wird.

14. Verfahren nach den Ansprüchen 1—13, dadurch gekennzeichnet, daß das wasserlösliche Polymerisatprodukt im Produktteil mit einer Base behandelt wird, um ein wenigstens teilweise neutralisiertes Salz davon zu bilden.

15. Verfahren nach den Ansprüchen 1—14, dadurch gekennzeichnet, daß in einem kontinuierlichen Verfahren Natriumchlorat und Natriummetabisulfit in molaren Mengen, deren Summe 0,5 bis 4% (bezüglich der molaren Menge Monomer) beträgt und deren Verhältnis 3 bis 10:1 ist, sowie Acrylsäure und Mercaptoethanol kontinuierlich in ein rückgeführtes wäßriges Gemisch enthaltend 35 bis 65% rückgeführter Polyacrylsäure, eingeleitet werden und die Reaktion bei 80 bis 100°C durchgeführt wird unter Bildung eines wäßrigen Reaktionsgemisches, von welchem ein Produktteil bestehend aus Polyacrylsäure-Polymerisat, abgezogen wird und der Restteil zurückgeführt wird.

**Revendications**

1. Procédé pour la préparation d'un polymère à partir d'un monomère refermant de l'acide acrylique dans lequel le monomère est polymérisé en présence d'un amorceur à radicaux libres, caractérisé en ce que, dans un processus continu, un constituant monomère qui comprend au moins 70% molaire d'acide acrylique et, facultativement jusqu'à 30% molaire d'un monomère copolymérisable, un amorceur à radicaux libres et un terminateur de chaîne à radicaux libres sont amenés dans un réacteur à boucle où ils sont mélangés avec un mélange aqueux recyclé comprenant un polymère hydrosoluble dudit constituant monomère et sont mis à réagir pour former un mélange réactionnel aqueux comprenant le polymère hydrosoluble dudit constituant monomère, en ce qu'une fraction de produit dudit mélange réactionnel est éliminée sous forme d'une solution de produit polymère hydrosoluble en laissant une fraction résiduelle et en ce que ladite fraction résiduelle est recyclée sous forme dudit mélange aqueux recyclé pour être mélangée à nouveau avec ledit constituant monomère, l'amorceur et le terminateur, ledit mélange réactionnel aqueux et/ou ladite fraction résiduelle étant refroidis, le taux de ladite fraction résiduelle à la fraction de produit étant d'au moins 50:1.

2. Procédé selon la revendication 1, caractérisé en ce que l'amorceur à radicaux libres bres est la combinaison rédox d'un chlorate soluble dans l'eau et d'un composé oxygéné du soufre soluble dans l'eau dérivé de l'acide sulfureux.

3. Procédé selon la revendication 2, caractérisé en ce que l'amorceur est du chlorate de sodium et du métabisulfite de sodium.

4. Procédé selon l'une quelconque des revendications 1 à 3, caractérisé en ce que le terminateur de chaîne est un composé thiol.

5. Procédé selon la revendication 4, caractérisé en ce que le composé thiol est le mercaptoéthanol.

6. Procédé selon l'une quelconque des revendications 1 à 5, caractérisé en ce que ledit mélange aqueux recyclé contient 35 à 65% en poids de polymère.

7. Procédé selon l'une quelconque des revendications 3 à 6, caractérisé en ce que l'amorceur est un chlorate et un métabisulfite dans un rapport molaire de 3—20:1.

8. Procédé selon l'une quelconque des revendications 3 à 7, caractérisé en ce que le pourcentage molaire total de chlorate et de métabisulfite au constituant monomère est de 0,5 à 4%.

9. Procédé selon l'une quelconque des revendications 4 à 8, caractérisé en ce que le monomère est l'acide acrylique, l'amorceur est du chlorate de sodium et du métabisulfite de sodium, le terminateur de chaîne est le 2-mercaptoéthanol présents dans un pourcentage molaire de 4 à 20% par rapport à l'acide acrylique.

10. Procédé selon l'une quelconque des revendications 1 à 9, caractérisé en ce que le polymère est préparé dans un appareil à boucle comprenant une conduite en forme de boucle comportant dans le sens de l'écoulement des liquides, (a) des arrivées séparées pour le monomère, le terminateur et un ou plusieurs amorceurs, (b) un mélangeur, (c) un pompe, (d) un échangeur de chaleur, (e) une sortie pour la fraction de produit, lesdites arrivées se trouvant en amont ou faisant partie intégrante dudit mélangeur.

11. Procédé selon l'une quelconque des revendications 1 à 10, caractérisé en ce qu'au moins 90% de la polymérisation ont lieu pendant le temps de séjour moyens dans la boucle.

12. Procédé selon l'une quelconque des revendications 1 à 11 caractérisé en ce que le taux de ladite fraction résiduelle à ladite fraction de produit est de 150:1 à 4000:1.

13. Procédé selon l'une quelconque des revendications 1 à 12, caractérisé en ce que la polymérisation s'effectue en présence d'un agent complexant pour le fer, exempt de thiol.

14. Procédé selon l'une quelconque des revendications 1 à 13, caractérisé en ce que le produit de polymère hydrosoluble dans la fraction de produit est traité par une base pour former un de ses sels au moins partiellement neutralisé.

15. Procédé selon l'une quelconque des revendications 1 à 14, caractérisé en ce que, dans un processus continu, on fait passer en continu du chlorate de sodium et du métabisulfite de sodium aqueux en des quantités molaires dont la somme est 0,5 à 4% (par rapport à la quantité molaire de monomère) et dont le rapport est de 3 à 10:1, de l'acide acrylique et du mercaptoéthanol dans un mélange aqueux recyclé comprenant 35 à 65% d'acide polyacrylique recyclé et en ce que la réaction est conduite à 80—100°C pour former un mélange réactionnel aqueux dont une fraction de produit comprenant le polymère polyacrylique est extraite et la fraction résiduelle est recyclée.